# EUROPEAN PATENT SPECIFICATION

(11) **EP 0 466 377 B1**
(45) Date of publication and mention of the grant of the patent: **07.06.1995**
(21) Application number: 91305936.6
(22) Date of filing: 01.07.1991
(51) Int. Cl.: G02F 1/136, G09G 3/36

(54) **Liquid crystal display for displaying half-tone images**
Flüssigkristall-Anzeigevorrichtung zur Anzeige von Halbtonbildern
Dispositif d'affichage à cristal liquide pour l'affichage d'images en demi-teinte

(30) Priority: 09.07.1990 JP 179727/90
(43) Date of publication of application: 15.01.1992
(73) Proprietor: International Business Machines Corporation, Armonk, N.Y. 10504 (US)
(72) Inventor: Suzuki, Hiroshi, Fujisawa-shi, Kanagawa-ken (JP); Yamaguchi, Hidefmi, Fujisawa-shi, Kanagawa-ken (JP)
(74) Representative: Burt, Roger James, Dr.

(56) References cited:
- EP-A- 0 316 822
- EP-A- 0 375 233
- PATENT ABSTRACTS OF JAPAN vol. 12, no. 29 (P-660)28 January 1988 & JP-A-62 182 717
- PATENT ABSTRACTS OF JAPAN vol. 10, no. 41 (P-429)18 February 1986 & JP-A-60 188 924

## Description

The present invention relates to an active matrix liquid crystal display having thin film transistor (thereafter referred to as TFT) switching elements, and more particularly, to a liquid crystal display for displaying half tone images by gradation of pixel area.

Conventionally, an active matrix liquid crystal display for displaying half tone images comprises picture elements each consisting of a plurality of pixel electrodes of different areas. Each pixel electrode is driven by a different TFT. PUPA no. 62-182717 describes an example of such a liquid crystal display. In operation, different combinations of the pixel electrodes in each picture element are turned on to produce different levels of half tone. For example, a liquid crystal display in which the picture elements include four pixel electrodes of different sizes can produce 16 levels of half tone.

In general, the TFTs connected to the pixel electrodes of each picture element have a 1:1 ratio of channel width to channel length. However, there is a pixel capacitance (CLC) associated with each pixel electrode which is a function of the size of the pixel electrode. The pixel capacitance acts as an electrical load on the output of the corresponding TFT. Therefore, each TFT associated with the picture element is effectively connected to a different electrical load.

Furthermore, because the same leakage current flows through each TFT, the speed of leakage is higher for a pixel electrode of smaller area than for a pixel of electrode of larger area. Therefore each pixel electrode has a different holding characteristic. Still furthermore, the voltage drop in the gate drive voltage applied to a TFT across the gate-source capacitance (CGS) of the TFT is a function of the size of the associated pixel electrode. This voltage drop is generally referred to as the "punch through" voltage (ΔVcell). Specifically ΔVcell is related to CLC by to the equation:${\text{V}}_{\text{cell}} {\text{=V}}_{\text{G}} \text{(} \frac{\text{1}}{{\text{1+C}}_{\text{LC}} {\text{/C}}_{\text{GS}}} \text{)}$
(where V_{G}, is a gate driving voltage, C_{LC} is a pixel capacitance, and C_{GS} is the gate source capacitance).

The optimum gate drive voltage is therefore different for each pixel electrode in the picture element.

The differences in the responses of the TFTS associated with driving each picture element cause flicker to be produced on the display.

In accordance with the present invention, there is now provided a liquid crystal display comprising: a plurality of picture elements each including a plurality of pixel electrodes of different size, and a plurality of thin film transistors each connected to a corresponding one of the pixel electrodes; characterised in that each of the thin film transistors comprises a channel whose width which is proportional to the size of the corresponding pixel electrode.

The present invention advantageously provides a liquid crystal display having a uniform display characteristic that is substantially free from flicker. This is produced by equalizing the "punch-through voltage" for every pixel and by equalizing a writing characteristic and a holding characteristic of each subpixel.

In a preferred embodiment of the present invention, there is provided a liquid crystal display in which the channel width of each TFT driving each pixel is changed in proportion to the size of each pixel electrode.

Embodiments of the present invention will now be described by way of example only, which reference to the accompanying drawings in which:-

FIG.1 is a circuit diagram of a picture element in an example of a liquid crystal display of the invention.

FIG.2 shows a structure of a TFT of the picture element shown in FIG1.

FIG.3 is a circuit diagram of a picture element in another example of a liquid crystal display of the present invention.

FIG.4 is a block diagram illustrating the area gradation method.

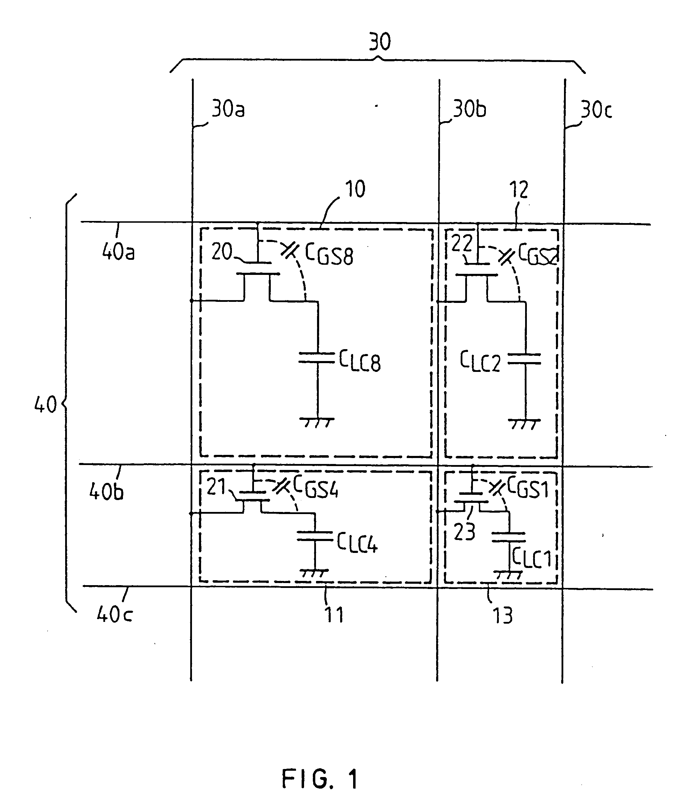

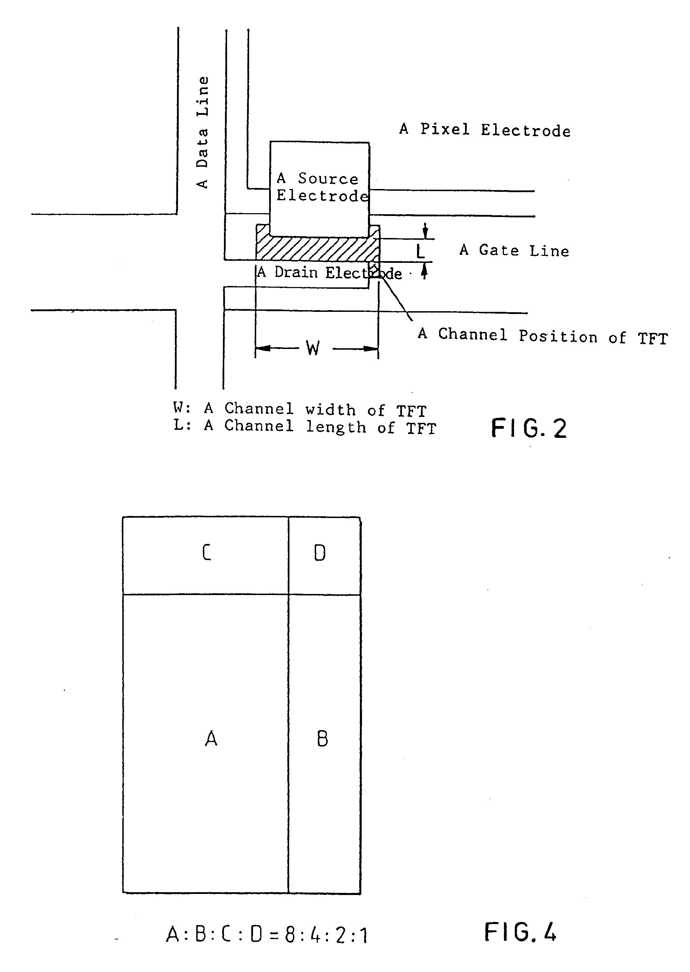

Referring first to FIG.1, an example of a liquid crystal of the present invention comprises, gate lines 40a and 40b connected to each of the gate electrodes of TFT's 20 and 22 and of TFT's 21 and 23, respectively. FIG.2 shows an example a structure of one of these TFTs. Data lines 30a and 30b are connected to each of the drain electrodes of the TFT's 20 and 21 and of the TFTs 22 and 23, respectively. In this example, picture elements are composed of four pixels. The ratio of pixels 10, 11, 12, and 13 in size is 8:4:2:1 of the Liquid Crystal Display. Therefore, one picture element can display 16 levels of gradation. Pixel electrodes 10, 11, 12, 13, and 14 produce pixel capacitances C_{LC8}, C_{LC4}, C_{LC2}, and C_{LC1}, respectively. The source electrode of the TFT's 20, 21, 22, and 23 are connected to pixel capacitances C_{LC8}, C_{LC4}, C_{LC2}, and C_{LC1}, respectively. Because, as aforementioned, the capacitance is proportional to the size of a pixel electrode, the ratio of the subpixel capacitances C_{LC8}, C_{LC4}, C_{LC2}, and C_{LC1} will be 8:4:2:1. Also, the TFT's 20, 21, 22, and 23 have the gate-source capacitances C_{GS8}, C_{GS4}, C_{GS2}, and C_{GS1}.

In operation, gate signals are sequentially applied to the gate lines 40a and 40b and a gate line 40c from a gate driven (not shown), the TFT's 20, 22, 21, and 23 are driven in this order. Simultaneously, data signals are applied to the data lines 30a, 30b and 30c from a data driver (not shown) Data is thus written into the pixels 10, 11, 12, and 13. For example the data written to pixel 10 is stored in the form of electronic charge on corresponding pixel capacitance CLC8. Preferably, enough charge is stored to maintain pixel 10 in an 'on' state for a frame refresh period after which the charge is refreshed.

If the channel width W of the TFT's shown in FIG.2 is changed in proportion to the size of the pixel electrodes, the gate source capacitance C_{GS} of the TFT, and ON resistance R_{ON} and 1/OFF resistance R_{OFF} of the TFT also change in proportion to the channel width W of the TFT. Therefore, a punch-through voltage ( V_{cell}), writing characteristic, and a holding characteristic of the pixels can be obtained varied according to the following:
(1) Punch-through voltage${\text{V}}_{\text{cell}} {\text{= V}}_{\text{G}} \frac{{\text{C}}_{\text{GS}}}{{\text{G}}_{\text{LC}} {\text{+C}}_{\text{GS}}} {\text{= V}}_{\text{G}} \frac{\text{1}}{\text{1+} \frac{{\text{C}}_{\text{LC}}}{{\text{C}}_{\text{GS}}}}$ (where V_{G} is a gate driving voltage of TFT, C_{LC} is a pixel capacitance, and C_{GS} is a capacitance between gate electrode and source electrode of TFT).
   In the equation (1), C_{GS} changing in proportion to the size of the pixel electrodes, C_{LC}/C_{GS} is constant and the punch-through voltage ( V_{cell}) is equalized independently of the size of the pixel electrodes so that flicker is not produced.
(2) Writing characteristic
   A write time T_{ON} can be defined as follows:${\text{T}}_{\text{ON}} {\text{=R}}_{\text{ON}} {\text{C}}_{\text{LC}}$ (where R_{ON} is ON resistance of TFT and C_{LC} is a pixel capacitance.)
   In the equation (2), if the channel width W of the TFT's is changed in proportion to the size of the pixel electrodes, thereby changing, the pixel capacitance C_{LC}, the time T_{ON} required for writing to the liquid crystal pixel will be constant since the ON resistance R_{ON} is inversely proportional to the channel width W. That is, the write time is the same for all pixel of different size of the pixel electrodes of the picture element and thus a flicker will not be produced.
(3) Holding characteristic
   A hold time T_{OFF} for the liquid crystal pixel based on a leakage current of the TFT can be obtained from the following:${\text{T}}_{\text{OFF}} {\text{=R}}_{\text{OFF}} {\text{C}}_{\text{LC}}$ (where R_{OFF} is OFF resistance of TFT and C_{LC} is a pixel capacitance.)
   In the equation (3), if the channel width W of the TFT is changed in proportion to the pixel capacitance C_{LC}, a hold time T_{OFF} will be constant independently of the size of the pixel electrode since the OFF resistance R_{OFF} of the TFT is inversely proportional to the channel width W of the TFT.

Accordingly, a data holding characteristic of liquid crystal is equalized for any pixel having the electrodes of different size.

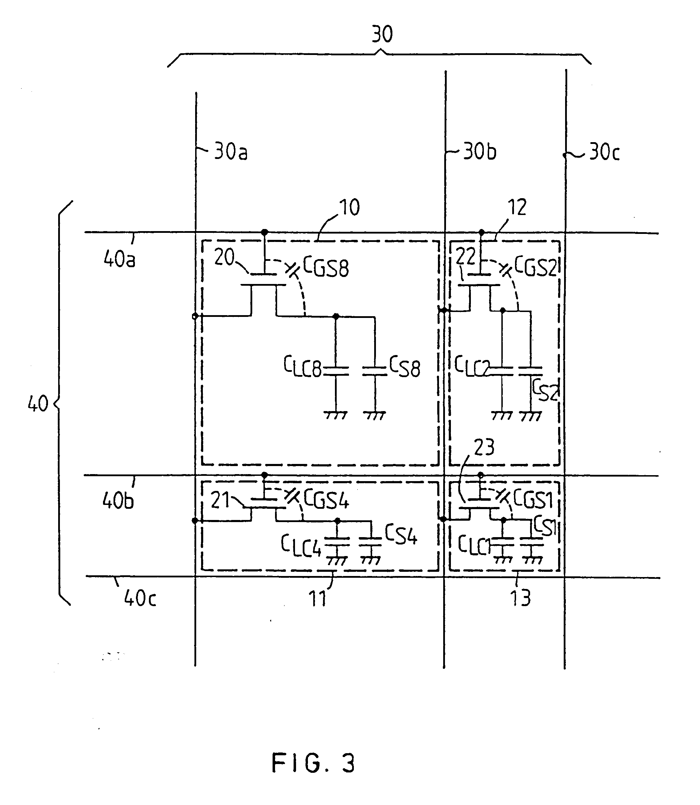

Referring now to Figure 3, in another example of a liquid crystal display of the present invention, each TFT in a picture element is provided with a compensation capacitor Cₛ connected in parallel with the pixel capacitance C_{LC}. The compensation capacitor increases the total capacitance of the pixel to Cₛ+C_{LC}, thereby increasing the period for which the pixel can be held in an 'on' state. Therefore, for the example of the present invention shown in Figure 3, C_{LC} in equation 1 is replaced by C_{LC}+Cₛ.

Thus, in the examples hereinbefore described of liquid crystal displays of the present invention hereinbefore described, the channel width of each TFT driving each pixel electrode, is changed in proportion to the size of each pixel electrode to equalize the influence of the gate driving voltage (punch-through voltage) on the potential of the pixel electrode. This maintains constant write time, picture element and constant hold time for the liquid crystal picture element, regardless of the size of the pixel electrode (that is, C_{LC}), and thus to prevents a display screen from flickering.

Examples of the present invention have been described with reference to a liquid crystal display panel comprising picture elements each including four pixel electrodes for producing 16 levels of half tone. It will however be appreciated that the present invention is not limited in application to such a liquid crystal display, and is equally applicable to liquid crystal displays with picture elements comprising more or less than four pixel electrodes for producing more or less than 16 levels of half tone.

## Claims

1. A liquid crystal display comprising: a plurality of picture elements each including a plurality of pixel electrodes (10,12,11,13) of different sizes, and a plurality of thin film transistors (20,21,22,23) each connected to a corresponding one of the pixel electrodes (10,12,11,13); characterised in that each of the thin film transistors (20,21,22,23) comprises a channel whose width is a function of the size of the corresponding pixel electrode (10,11,12,13).

2. A liquid crystal display as claimed in claim 1 wherein each of the thin film transistors (20,21,22,23) comprises a channel whose width is proportional to the size of the corresponding pixel electrode (10,11,12,13).

3. A liquid crystal display as claimed in claim 1 or claim 2 wherein each picture element comprises a plurality of compensation capacitors (Cs8,Cs4,Cs2,Cs1) each connected to a corresponding one of the pixel electrodes (10,11,12,13).

## Patentansprüche

1. Eine Flüssigkristall-Anzeige, folgendes aufweisend: eine Vielzahl von Bildelementen, von denen jedes eine Vielzahl von Pixel-Elektroden (10, 12, 11, 13) unterschiedlicher Größe umfaßt, und eine Vielzahl von Dünnfilm-Transistoren (20, 21, 22, 23), die jeweils an eine entsprechende Pixel-Elektrode (10, 12, 11, 13) angeschlossen sind; dadurch gekennzeichnet, daß jeder Dünnfilm-Transistor (20, 21, 22, 23) einen Kanal umfaßt, dessen Breite eine Funktion der Größe der entsprechenden Pixel-Elektrode (10, 11, 12, 13) ist.

2. Eine Flüssigkristall-Anzeige nach Anspruch 1, bei der jeder Dünnfilm-Transistor (20, 21, 22, 23) einen Kanal umfaßt, dessen Breite der Größe der entsprechenden Pixel-Elektrode (10, 11, 12, 13) proportional ist.

3. Eine Flüssigkristall-Anzeige nach Anspruch 1 oder Anspruch 2, bei der jedes Bildelement eine Vielzahl von Ausgleichskondensatoren (Cs8, Cs4, Cs2, Cs1) umfaßt, die jeweils an eine entsprechende Pixel-Elektrode (10, 11, 12, 13) angeschlossen sind.

## Revendications

1. Dispositif d'affichage à cristal liquide comprenant une pluralité d'éléments d'image comportant chacun une pluralité d'électrodes pixel (10, 12, 11, 13) de tailles différentes, et une pluralité de transistors à film mince (20, 21, 22, 23) connectés chacun à une électrode pixel correspondante (10, 12, 11, 13) ; caractérisé en ce que chacun des transistors à film mince (20, 21, 22, 23) comprend un canal dont la largeur est fonction de la taille de l'électrode pixel correspondante (10, 11, 12, 13).

2. Dispositif d'affichage à cristal liquide tel que revendiqué dans la revendication 1, dans lequel chacun des transistors à film mince (20, 21, 22, 23) comprend un canal dont la largeur est proportionnelle à la taille de l'électrode pixel correspondante (10, 11, 12, 13).

3. Dispositif d'affichage à cristal liquide tel que revendiqué dans la revendication 1 ou 2, dans lequel chaque élément d'image comprend une pluralité de condensateurs à compensation (Cs8, Cs4, Cs2, Cs1) connectés chacun à une électrode pixel correspondante (10, 11, 12, 13).
